# EUROPÄISCHE PATENTSCHRIFT

(11) **EP 2 060 422 B1**
(45) Veröffentlichungstag und Bekanntmachung des Hinweises auf die Patenterteilung: **21.05.2014**
(21) Anmeldenummer: 08018546.5
(22) Anmeldetag: 23.10.2008
(51) Int. Cl.: B60J 1/20, B60R 5/04

(54) **Rolloeinrichtung für ein Kraftfahrzeug**
Roller device for a motor vehicle
Dispositif de store pour véhicule automobile

(30) Priorität: 14.11.2007 DE 102007055471
(43) Veröffentlichungstag der Anmeldung: 20.05.2009
(73) Patentinhaber: BOS GmbH & Co. KG, 73760 Ostfildern (DE)
(72) Erfinder: Bilandzija, Goran, 73760 Ostfildern (DE); Wörner, Helmut, 73760 Ostfildern (DE)
(74) Vertreter: Klement, Lukas

(56) Entgegenhaltungen:
- WO-A1-96/06756
- DE-A1- 10 252 490
- DE-A1-102006 002 781
- DE-A1-102006 008 222

## Beschreibung

Die Erfindung betrifft eine Rolloeinrichtung für ein Kraftfahrzeug mit einem Gehäuse zur Aufnahme eines abwickelbaren flexiblen Flächengebildes sowie linksseitigen und rechtsseitigen Befestigungsabschnitten zur Anbringung der Rolloeinrichtung an Fahrzeugseitenwandungen des Fahrzeugs.

Gattungsgemäße Rolloeinrichtungen dienen insbesondere als Gepäckraumabdeckungen und Trennnetze, die einen Gepäckbereich eines Fahrzeugs von einem Fahrgastbereich abtrennen. Derartige Rolloeinrichtungen sind üblicherweise insbesondere bei Kombifahrzeugen zu finden. Sie sind dort im Bereich hinter den Fondsitzen angeordnet und gestatten im Falle einer Trenneinrichtung den Auszug des vertikalen Trennnetzes, welches dann im Bereich des Fahrzeughimmels festgelegt werden kann, und im Falle einer Gepäckraumabdeckung den Auszug einer horizontalen Gepäckraumabdeckung, welche bis in den Bereich einer Heckklappe ausgezogen und dort festgelegt werden kann.

Gattungsgemäße Rolloeinrichtungen gibt es sowohl in einer Ausgestaltung, bei der diese fest im Fahrzeug eingebaut sind und nicht zur werkzeuglosen Herausnahme vorgesehen sind, als auch als zumindest teilweise entfernbare Rolloeinrichtungen, bei denen Aufnahmevorrichtungen der Rolloeinrichtung zur Aufnahme eines ausbaubaren Teils der Rolloeinrichtung fest im Fahrzeug integriert sind und bei denen dieser ausbaubare Teil, insbesondere ein Kassettengehäuse der Rolloeinrichtung mit integrierter Rollowelle und darauf aufgerolltem Flächengebilde, in die Aufnahmevorrichtungen je nach Bedarf eingesetzt oder aus ihr ausgebaut werden kann. In beiden Fällen werden die Rolloeinrichtungen oder zumindest deren Aufnahmevorrichtungen mit beidseitigen Befestigungsabschnitten an den Fahrzeugwandungen festgelegt.

Aus der EP 0 754 594 B1 ist eine Abdeckeinrichtung bekannt, deren Gehäuse in zwei aufeinander zu weisend offene Aufnahmetaschen einsetzbar ist, die spiegelsymmetrisch im Bereich der Seitenwände des Fahrzeugs angeordnet sind.

Als nachteilig an den aus dem Stand der Technik bekannten Rolloeinrichtungen wird angesehen, dass sie sich im Falle eines Unfalls, insbesondere eines Heckaufpralls, aus ihrer Befestigung lösen können, insbesondere widerstandslos aus dieser herausrutschen können. Dies liegt insbesondere darin begründet, dass die Fahrzeugseitenwandungen im Falle eines solchen Unfalls, vor allem bei Auffahrunfällen, voneinander weg gedrückt werden können, wodurch die Rolloeinrichtung oder ein Teil von ihr linksseitig und/oder rechtsseitig die Verbindung mit der Seitenwandung oder dort vorgesehenen Aufnahmevorrichtung verliert und dadurch unkontrolliert durch das Fahrzeug schleudern kann. Selbst wenn zwischen einer seitlichen Aufnahmevorrichtung der Rolloeinrichtung und dem Gehäuse der Rolloeinrichtung eine formschlüssig in Fahrzeugquerrichtung wirksame Verbindung geschaffen würde, so führt dies lediglich dazu, dass oben beschriebene Unfälle entweder ein Herausreißen der Aufnahmevorrichtung aus der Seitenwandung des Fahrzeugs oder ein Herausreißen des Gehäuses aus der Aufnahmevorrichtung zur Folge haben.

Das Dokument DE 10 2006 008 222 A1 offenbart eine Rolloeinrichtung mit einer Ausgleicheinrichtung die eine Beabstandungsvergrößerung gestaltet.

### Aufgabe und Lösung

Aufgabe der Erfindung ist es, die aus dem Stand der Technik bekannten Rolloeinrichtungen hinsichtlich ihrer Betriebssicherheit zu verbessern.

Erfindungsgemäß wird die Aufgabe durch die Merkmale des Anspruchs 1 erreicht.

Bei der erfindungsgemäßen Rolloeinrichtung ist somit ein Gehäuse vorgesehen, das sich im eingebauten Zustand in Fahrzeugquerrichtung erstreckt. Als Gehäuse werden im Zusammenhang mit dieser Erfindung Abschnitte angesehen, die eine Wickelwelle für das Flächengebilde umgeben und in denen die Wickelwelle gelagert ist. Das Gehäuse ist vorzugsweise weitgehend geschlossen, so dass die Wickelwelle blickdicht abgeschottet ist. Am linksseitigen Ende sowie am rechtsseitigen Ende des Gehäuses sind jeweils Befestigungsabschnitte vorgesehen, die ihrerseits zur Befestigung an der Fahrzeugseitenwandung vorgesehen sind. Solche Befestigungsabschnitte können insbesondere durch mit dem Gehäuse verbundene Blechabschnitte gebildet werden, die jeweils vorzugsweise mittels Schrauben oder Nieten unmittelbar mit der Fahrzeugseitenwandung verbunden sind oder mittelbar über eine Innenverkleidung des Fahrzeugs oder andere Zwischenelement mit der Fahrzeugseitenwandung verbunden sind.

Im Falle eines Unfalls kann sich der Abstand der Fahrzeugseitenwandungen zueinander vergrößern, wodurch es zu einer Zugkraftbelastung an den Enden des Gehäuses kommt. Um zu verhindern, dass sich das Gehäuse infolge dieser Zugkraftbelastung entweder von einer der Fahrzeugseitenwandungen löst oder aber zerrissen wird, ist die zumindest abschnittsweise plastisch verformbare Ausgleichseinrichtung vorgesehen. Diese ist zwischen dem Gehäuse und einem der Befestigungsabschnitte, der im eingebauten Zustand an der Fahrzeugseitenwandung festgelegt ist, angeordnet. Vorzugsweise ist den beiden Befestigungsabschnitten links- und rechtsseitig in symmetrischer Weise jeweils eine Ausgleichseinrichtung zugeordnet.

Die Ausgangsbeabstandung des Befestigungsabschnitts vom Gehäuse ist derart gewählt, dass die beidseitigen Befestigungsabschnitte angepasst an den Abstand der Fahrzeugseitenwandungen voneinander beabstandet sind. Im Zuge einer Vergrößerung des Abstandes der Fahrzeugseitenwandungen wird die Ausgleichseinrichtung jedoch in Fahrzeugquerrichtung gedehnt, ohne dabei den Kontakt zum Gehäuse oder zur zugeordneten Fahrzeugseitenwandung zu verlieren. Das Gehäuse bleibt also beidseitig mit den Fahrzeugseitenwandungen verbunden und wird demnach daran gehindert, in unkontrollierter Art und Weise durch den Fahrzeuginnenraum geschleudert zu werden.

Besonders bevorzugt ist es dabei, wenn die Ausgleichseinrichtung eine Beabstandungsvergrößerung von mindestens 30 mm, vorzugsweise von mindestens 50 mm, in Fahrzeugquerrichtung gestattet. Um auch besonders große Verformungen kompensieren zu können, beträgt die maximale Beabstandungsvergrößerung bei einer besonders vorteilhaften Ausgestaltung mindestens 100 mm, vorzugsweise mindestens 150 mm. Diese Strecken werden als zweckmäßige Mindeststrecken angesehen, um die Wirkung eines Heckaufpralls des Fahrzeugs und die damit einhergehende Vergrößerung der Beabstandung der Seitenwandung sicher kompensieren zu können. Diese Ausgestaltung wird dadurch realisiert, dass die Ausgleichseinrichtung derart ausgebildet ist, dass weder die Verbindung zwischen Fahrzeugseitenwandungen und den Befestigungsabschnitten noch die Verbindung zwischen den Befestigungsabschnitten und dem Gehäuse bei einer Kraft in Fahrzeugquerrichtung versagt, die aufgrund der konstruktiven Gestaltung zur Dehnung der Ausgleichseinrichtung um die genannte Strecke in Fahrzeugquerrichtung ausreicht.

Bei Ausgestaltungen, bei denen beidseitig des Gehäuses zwischen dem Gehäuse und den beiden Befestigungsabschnitten jeweils Ausgleichseinrichtungen vorgesehen sind, wird bevorzugt, dass die Ausgleichseinrichtungen gemeinsam eine Beabstandungsvergrößerung in Fahrzeugquerrichtung von mindestens 60 mm, vorzugsweise von mindestens 80 mm, idealerweise von mindestens 300 mm, gestatten.

Besonders bevorzugt ist es, wenn die Ausgleichseinrichtung für eine Beabstandungsvergrößerung in Fahrzeugquerrichtung ausgebildet ist, die zumindest überwiegend durch eine Biegeverformung der Ausgleichseinrichtung erreichbar ist. Eine Biegeverformung ist verglichen mit einer Streckverformung bei geringeren Kräften bereits erreichbar. Darüber hinaus kann die Biegeverformung durch die Geometrie der Ausgleichseinrichtung im Vorfeld mit gut reproduzierbarem Verhalten festgelegt werden. Vorzugsweise ist die Ausgleichseinrichtung als Blechteil oder Teil eines Blechteils ausgebildet, insbesondere als Blechteil an welchem sich einstückig der Befestigungsabschnitt anschließt. Das Blechteil ist vorzugsweise derartig gestaltet, dass es sich bei einer Kraftbeaufschlagung in Fahrzeugquerrichtung durch Verformung entlang von Biegelinien verformt, die in einer durch Fahrzeugquerrichtung und Fahrzeuglängsrichtung aufgespannten Ebene verlaufen. Ein solches Blechteil bedarf für eine Verformung in Fahrzeugquerrichtung eine vergleichsweise geringe Kraft.

Bei einer Weiterbildung der Erfindung wird die Beabstandungsvergrößerung in Fahrzeugquerrichtung zumindest teilweise über die Vergrößerung eines eingeschlossenen Zwischenwinkels zwischen zwei miteinander stoffschlüssig verbundenen Schenkelabschnitten ermöglicht, von denen jeweils einer auf der Gehäuseseite und einer auf der Befestigungsabschnittsseite vorgesehen ist. Die beiden Schenkel sind an ihrem aufeinander zu weisenden Ende miteinander stoffschlüssig, insbesondere einstückig, verbunden und mit ihren voneinander abgewandten Enden am Gehäuse einerseits bzw. der Fahrzeugseitenwandung oder einem mit dieser fest verbundenen Teil andererseits befestigt. Die beiden Schenkel, die vorzugsweise im Ausgangszustand aneinander anliegen und somit vorzugsweise einen Winkel von 0° einschließen, können infolge einer Kraftbeaufschlagung V-förmig auseinander gezogen werden und somit die Beabstandungsvergrößerung erzielen.

Bei einer Weiterbildung der Erfindung ist die Ausgleichseinrichtung derart ausgebildet, dass sie eine Beabstandungsvergrößerung zwischen dem Befestigungsabschnitt und dem Gehäuse in Fahrzeugquerrichtung sowie Fahrzeuglängsrichtung ermöglicht. Dadurch kompensiert die Ausgleichseinrichtung nicht nur eine Aufweitung des Fahrzeugs und eine damit einhergehende Vergrößerung der Beabstandung der Fahrzeugseitenwandungen, sondern kann auch die kinetische Energie des Gehäuses aufnehmen, die im Zuge eines Aufpralls zu einer Verformung der Ausgleichseinrichtung führt.

Die Ausgleichseinrichtung weist vorzugsweise ein Deformationsblech auf oder ist als Teil eines solchen Deformationsblechs ausgebildet. Ein solches Deformationsblech stellt den einfachsten Weg zur Realisierung einer erfindungsgemäßen Ausgleichseinrichtung da. Als vorteilhaft wird es dabei angesehen, dass das Deformationsblech zur unmittelbaren Festlegung an einer Fahrzeugseitenwandung und/oder am Gehäuse oder einer Aufnahmevorrichtung für das Gehäuse ausgebildet ist, vorzugsweise mittels einer Schraub- oder Nietverbindung. Im einfachsten Fall braucht es daher als Komponenten zur Realisierung der Rolloeinrichtung lediglich das Gehäuse der Rolloeinrichtung mitsamt den die Wickelwelle betreffenden Komponenten sowie beidseitig des Gehäuses jeweils ein Deformationsblech, was einerseits am Gehäuse und andererseits an der zugeordneten Fahrzeugseitenwandung befestigt wird.

Besonders bevorzugt ist eine Ausgestaltung, bei der eine linksseitige und eine rechtsseitige Aufnahmevorrichtung zur lösbaren Aufnahme des Gehäuses vorgesehen sind, wobei die Aufnahmevorrichtungen mittels der Befestigungsabschnitte mit der Fahrzeugseitenwandung verbunden sind. Bei einer solchen Ausgestaltung ist das Gehäuse aus den Aufnahmevorrichtungen entnehmbar und separat handhabbar. Die Aufnahmevorrichtungen, die mittels der Befestigungsabschnitte mit der Fahrzeugseitenwandung verbunden sind, verbleiben dagegen fest eingebaut im Fahrzeug. Die Ausgleichseinrichtung ist bei einer solchen Gestaltung zwischen einer Fahrzeugwandung und der Aufnahmevorrichtung vorgesehen.

Besonders bevorzugt ist es dabei, dass das Gehäuse und die Aufnahmevorrichtungen jeweils zur Herstellung einer formschlüssigen Verbindung bezogen auf die Fahrzeugquerrichtung ausgebildet sind. Im eingesetzten Zustand des Gehäuses ist dieses somit nicht in Fahrzeugquerrichtung aus den Aufnahmevorrichtungen herausziehbar, so dass es mit beiden Aufnahmevorrichtungen in formschlüssiger Verbindung verbleibt, wenn sich die Beabstandung der Seitenwandungen im Falle eines Unfalls vergrößert.

Die Erfindung betrifft weiterhin ein Fahrzeug mit einer im Fahrzeuginnenraum eingesetzten Rolloeinrichtung des oben beschriebenen Typs.

### Kurzbeschreibung der Zeichnungen

Weitere Vorteile und Merkmale der Erfindung ergeben sich außer aus den Ansprüchen auch aus der Beschreibung einer bevorzugten Ausführungsbeispiels der Erfindung, welches anhand der Zeichnungen näher erläutert ist. Dabei zeigen:

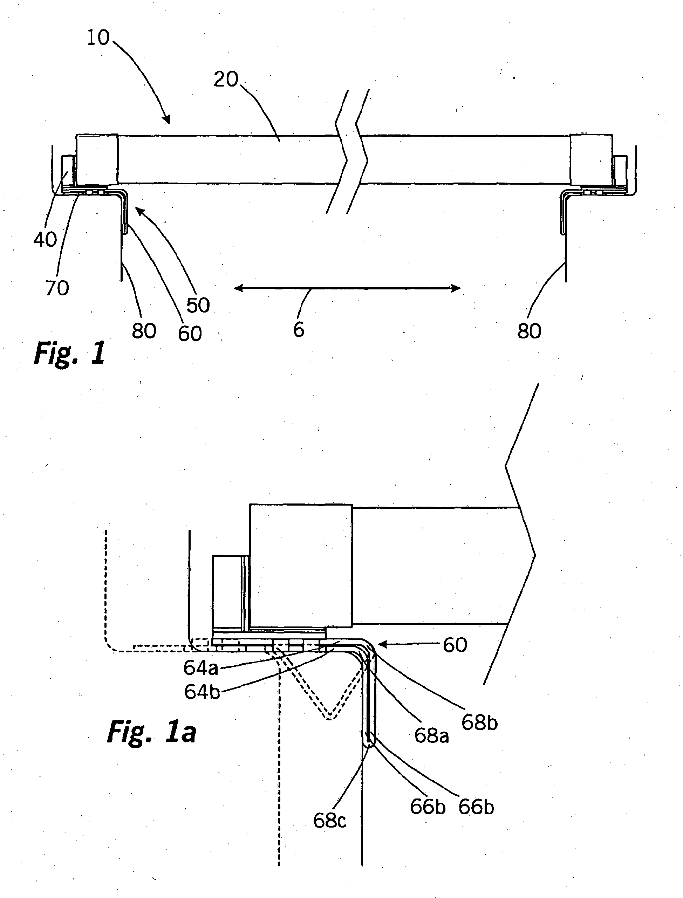

- Fig. 1: eine erfindungsgemäße Rolloeinrichtung in einer Gesamtdarstellung,
- Fig. 1 a: eine Seite der Rolloeinrichtung der Fig.1 im Ausgangszustand sowie im Zustand einer Beabstandungsvergrößerung zwischen den Befestigungsabschnitten und dem Gehäuse,
- Fig. 2: eine Aufnahmevorrichtung der Rolloeinrichtung der Fig. 1 mitsamt einer Ausgleichseinrichtung und Befestigungsabschnitten zur Befestigung an einer Fahrzeugseitenwandung,
- Fig. 3: die Ausgleichseinrichtung der Fig. 2 in einer separaten Darstellung und
- Fig. 4: das Gehäuse der Rolloeinrichtung der Fig. 1 in einer Seitendarstellung.

### Detaillierte Beschreibung der Ausführungsbeispiele

Fig. 1 zeigt eine erfindungsgemäße Rolloeinrichtung 10 in einer Gesamtdarstellung. Bei der Rolloeinrichtung 10 kann es sich sowohl um eine Trennnetz-Rolloeinrichtung als auch um eine Rolloeinrichtung zum Zwecke der Gepäckraumabdeckung handeln. Das flexible Flächengebilde der Rolloeinrichtung ist aufgewickelt auf einer Wickelwelle in einem Kassettengehäuse 20 untergebracht und aus diesem ausziehbar. Das Kassettengehäuse 20 ist in einem in Fig. 1 nur durch Fahrzeugseitenwandungen 80 angedeuteten Fahrzeug derart angeordnet, dass es sich in Fahrzeugquerrichtung 6 von einer Seite des Fahrzeugs und zur anderen Seite des Fahrzeugs erstreckt.

Das Gehäuse 20 ist mittels zweier Aufnahmevorrichtungen 40 rechts- und linksseitig jeweils mit einem Deformationsblech 50 verbunden, welches einen Abschnitt 60 aufweist, der eine Ausgleichseinrichtung 60 darstellt. Die Ausgleichseinrichtungen sind in Form eines doppellagigen "L" geformt. Das Deformationsblech 50 und die Ausgleichseinrichtungen 60 als Teil des Deformationsblechs 50 sind mittels einstückig angeformten Befestigungsabschnitten 70 mit den Fahrzeugseitenwandungen 80 fest verbunden.

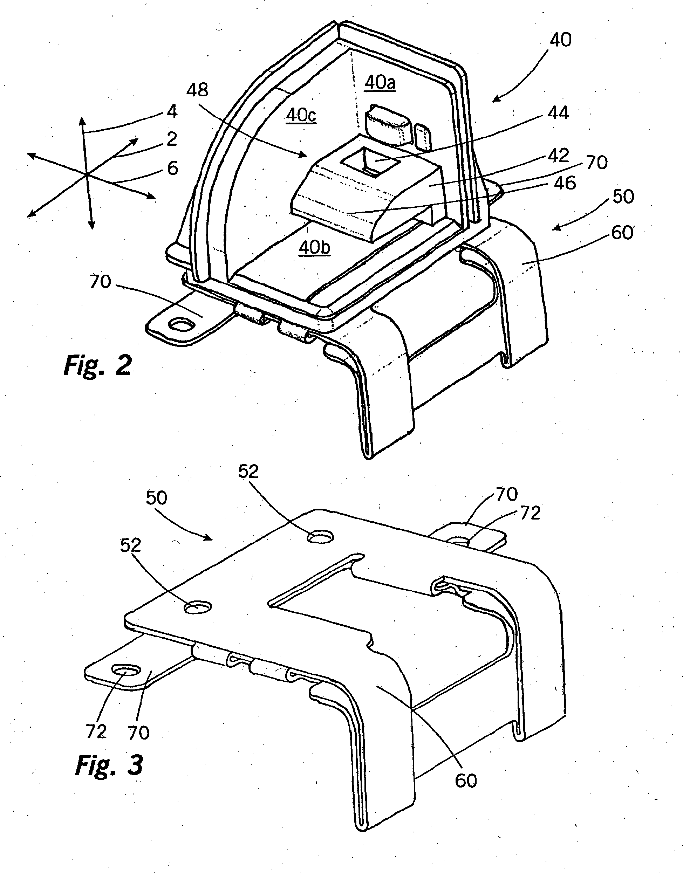

Die verschiedenen Komponenten sind in den Figuren 2 bis 4 detaillierter dargestellt.

Fig. 2 zeigt die linksseitige Aufnahmevorrichtung 40 zusammen mit den zugeordneten Befestigungsabschnitten 70 sowie der dazwischen vorgesehenen Ausgleichseinrichtung 60, wobei die Ausgleichseinrichtung 60 und die Befestigungsabschnitte 70 Teil des einstückigen Deformationsblechs 50 sind.

Die Aufnahmevorrichtung 40 ist als Kunststoffecke 40 ausgebildet, die in Fahrzeuglängsrichtung 2 nach vorne, in Fahrzeughochrichtung 4 nach unten und in Fahrzeugquerrichtung 6 nach außen durch Wandungen 40a, 40b, 40c geschlossen ist. Diese Wandungen 40a, 40b, 40c umgeben eine Aufnahmeraum 48, der nach hinten, nach oben und in Richtung der jeweils gegenüberliegenden Aufnahmevorrichtung 40 offen ist. Dies ermöglicht es, das Gehäuse 20 in Fahrzeuglängsrichtung 2 nach vorne in die Aufnahmevorrichtungen einzuschieben. In entgegengesetzte Richtung, also in Fahrzeuglängsrichtung nach hinten, erstreckt sich von der in Fahrzeuglängsrichtung 2 vorderen Wandung 40a eine an der Wandung angeformte Kunststoffzunge 42 in den Aufnahmeraum, die durch eine vertikale Durchbrechung 44 unterbrochen wird.

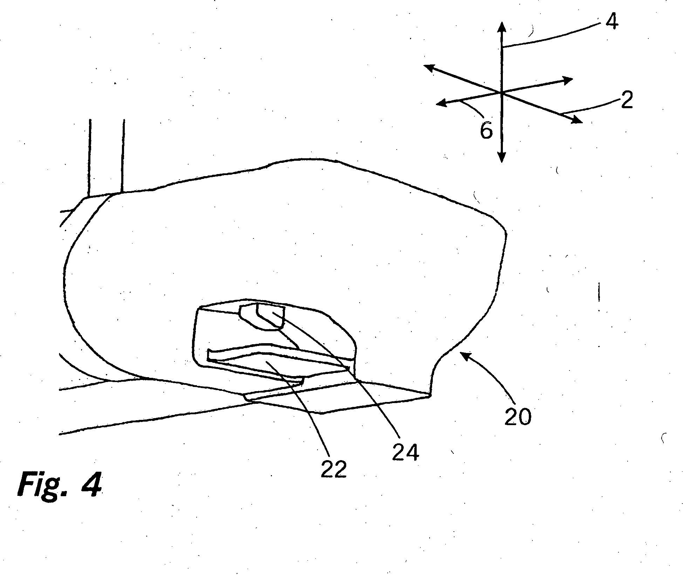

Zur Festlegung an den Aufnahmevorrichtungen 40 weist das Gehäuse 20, wie in der Fig. 4 ersichtlich ist, eine bezüglich der Formgebung korrespondierende Ausgestaltung im Bereich seiner beiden Enden auf. In Fahrzeughochrichtung 4 wird die Festlegung des Kassettengehäuses 20 dadurch erzielt, dass dieses mit einem flächigen Abschnitt 22 unter die sich nach hinten erstreckende Kunststoffzunge 42 im Aufnahmeraum 48 greift, so dass dieser flächige Abschnitt 22 in Fahrzeughochrichtung 4 zwischen der Kunststoffzunge 42 und der unteren Wandung 40b der Aufnahmevorrichtung 40 vollständig fixiert ist. In Fahrzeuglängsrichtung 2 und Fahrzeugquerrichtung 6 wird eine Fixierung des Kassettengehäuses 20 an den Aufnahmevorrichtungen 40 dadurch erreicht, dass ein in Fahrzeughochrichtung 4 manuell verlagerbarer Riegel 24 in die hierfür vorgesehene Ausnehmung 44 der Kunststoffzunge 42 einrückt. In nicht näher dargestellter Art und Weise ist der Riegel 24 nach unten federkraftbeaufschlagt, so dass er beim Einschieben des Kassettengehäuses 20 in die Aufnahmevorrichtungen 40 zunächst im Bereich von Schrägen 46 am nach hinten gewandten Ende der Kunststoffzungen 42 entgegen der Federkraft ausgelenkt wird, um anschließend in die Ausnehmung 44 sprungartig einzurücken. Zum Lösen des Gehäuses 20 ist der Riegel manuell nach oben auslenkbar. Die Aufnahmevorrichtungen 40 und das Kassettengehäuse 20 sind durch den Abschnitt 22 und den Riegel 24 derart aufeinander angepasst, dass eine jede der Aufnahmevorrichtungen 40 eine vollständige formschlüssige Verbindung mit dem Kassettengehäuse 20 herstellen kann, die die translative Beweglichkeit des Kassettengehäuses 20 vollständig in allen drei Raumrichtungen 2, 4, 6 begrenzt.

Die Aufnahmevorrichtung 40 ist, wie durch die Fig. 2 bereits dargestellt ist, mit dem Deformationsblech 50 verbunden, welches in Fig. 3 separat dargestellt ist. Wie oben beschrieben umfasst dieses Deformationsblech 50 sowohl einen als Ausgleichseinrichtung 60 wirkenden Abschnitt 60, der die Form eines doppelwandigen "L" aufweist, als auch die einstückig damit verbundenen Befestigungsabschnitte 70. Die Befestigungsabschnitte 70 werden, wie in Fig. 1 dargestellt ist, fest mit Fahrzeugseitenwandungen 80 verbunden. Hierzu sind Bohrungen 72 vorgesehen, die eine Niet- oder Schraubverbindung ermöglichen. Die Aufnahmevorrichtung 40 ist ebenfalls mit einer Niet- oder Schraubverbindung mit dem Deformationsblech 50 verbunden. Hierfür sich am Deformationsblech 50 Bohrungen 52 vorgesehen. Durch diese Verbindung der Deformationsbleche 50 mit den Fahrzeugseitenwandungen 80 und den Aufnahmevorrichtungen 40 sind die beiden Aufnahmevorrichtungen 40 derart mit den jeweiligen Fahrzeugseitenwandungen 80 verbunden, dass sie werkzeuglos nicht gelöst werden können.

Allerdings sind die Aufnahmevorrichtungen 40 gegenüber den jeweiligen Seitenwandungen 80 des Fahrzeugs sowie den daran festgelegten Befestigungsabschnitten 70 jeweils eingeschränkt beweglich. Diese Beweglichkeit wird jeweils durch die plastische Verformbarkeit des Ausgleichsabschnitts 60 erreicht. Sie ermöglicht es, dass im Falle eines Unfalles, durch den die gegenüberliegenden Seitenwandungen 80 des Fahrzeugs um beispielsweise etwa 100 mm zusätzlich voneinander beabstandet werden, die beiden Aufnahmevorrichtungen 40 auf beiden Seiten der Rolloeinrichtung 10 mit den Seitenwandungen 80 verbunden bleiben, so dass das Kassettengehäuse 20 der Rolloeinrichtung 10, das wiederum fest mit den Aufnahmevorrichtungen 40 verbunden ist, nicht unkontrolliert durch das Fahrzeug geschleudert werden kann.

Wie in Fig. 1 a durch gestrichelte Linien dargestellt ist, verformen sich zu diesem Zweck die Ausgleichseinrichtungen 60 im Unfallfalle. Die Ausgleichseinrichtungen 60 weisen mit ihrer Ausgestaltung in Form eines doppellagigen "L" eine hierzu besonders geeignete Formgebung auf. Während die beiden aufeinander liegenden L-Balken 64a, 64b durch die wachsende Beabstandung der Seitenwandungen 80 gegeneinander parallel verschoben werden, nehmen die beiden zunächst parallel zueinander und im rechten Winkel zu den L-Balken 64a, 64b angeordneten L-Balken 66a, 66b im Unfallfalle eine in etwa V-förmige Stellung ein, wobei es in Knickbereichen 68a, 68b, 68c zu Biegeverformungen kommt. Die verformte Gestalt der Ausgleichseinrichtung 60 ist in Fig. 1 a durch die gestrichelten Linien angedeutet. Beide Ausgleichseinrichtungen können gemeinsam eine Vergrößerung des Abstandes der Seitenwandungen 80 von bis zu 300 mm kompensieren.

Ein besonders vorteilhaftes und reproduzierbares Verformungsverhalten wird bei der beschriebenen Ausführungsform durch die Erstreckung der Knickbereiche 68a, 68b, 68c in Fahrzeuglängsrichtung erzielt.

## Patentansprüche

1. Rolloeinrichtung (10) für ein Kraftfahrzeug mit
- einem Gehäuse (20) zur Aufnahme eines abwickelbaren flexiblen Flächengebildes,
- linksseitigen und rechtsseitigen Befestigungsabschnitten (70) zur Anbringung der Rolloeinrichtung (10) an Fahrzeugseitenwandungen (80) des Kraftfahrzeugs und
- einer linksseitigen sowie einer rechtsseitigen Aufnahmevorrichtung (40) zur lösbaren Aufnahme des Gehäuses (20), die mittels der Befestigungsabschnitte (70) mit der Fahrzeugseitenwandung (80) verbunden sind,
wobei
zumindest zwischen einem Befestigungsabschnitt (70) und der zugeordneten Aufnahmevorrichtung (40) eine Ausgleichseinrichtung (60) vorgesehen ist, die ausgehend von einer Ausgangsbeabstandung des Gehäuses (20) vom Befestigungsabschnitt (70) in Fahrzeugquerrichtung (6) in einer Ausgangssituation eine Beabstandungsvergrößerung durch plastische Verformung der Ausgleichseinrichtung (60) gestattet, **dadurch gekennzeichnet, dass** die Ausgleichseinrichtung (60) in einer doppellagigen L-Form ausgestaltet ist, wobei bei einem Unfall zwei erste aufeinanderliegende L-Balken (64a, 64b) bei wachsender Beabstandung der Fahrzeugseitenwandungen gegeneinander parallel verschoben werden und zwei in rechtem Winkel zu den ersten L-Balken (64a, 64b) angeordnete zweite L-Balken (66a, 66b) eine etwa V-förmige Stellung einnehmen, wobei es in Knickbereichen (68a, 68b, 68c) zu Biegeverformungen kommt.

2. Rolloeinrichtung für ein Kraftfahrzeug nach Anspruch 1,
**dadurch gekennzeichnet, dass**
die Ausgleicheinrichtung (60) eine Beabstandungsvergrößerung von mindestens 30mm, vorzugsweise von mindestens 50mm, in Fahrzeugquerrichtung (6) gestattet.

3. Rolloeinrichtung für ein Kraftfahrzeug nach Anspruch 1 oder 2,
**dadurch gekennzeichnet, dass**
die Ausgleicheinrichtung (60) für eine die Beabstandungsvergröβerung in Fahrzeugquerrichtung (6) ausgebildet ist, die zumindest überwiegend durch eine Biegeverformung der Ausgleichseinrichtung (60) erreichbar ist.

4. Rolloeinrichtung nach einem der vorstehenden Ansprüche,
**dadurch gekennzeichnet, dass**
die Ausgleichseinrichtung (60) derart ausgebildet ist, dass sie eine Beabstandungsvergrößerung zwischen dem Befestigungsabschnitt (70) und dem Gehäuse (20) in Fahrzeugquerrichtung (6) sowie in Fahrzeuglängsrichtung (2) ermöglicht.

5. Rolloeinrichtung nach einem der vorstehenden Ansprüche,
**dadurch gekennzeichnet, dass**
die Ausgleichseinrichtung (60) ein Deformationsblech (50) aufweist oder Teil eines Deformationsblechs (50) ist.

6. Rolloeinrichtung nach Anspruch 5,
**dadurch gekennzeichnet, dass**
das Deformationsblech (50) zur unmittelbaren Festlegung an einer Fahrzeugseitenwandung (80) und/oder am Gehäuse (20) oder einer Gehäuseaufnahme (40) ausgebildet ist, vorzugsweise jeweils mittels einer Schraub- oder Nietverbindung.

7. Fahrzeug mit einer in einem Fahrzeuginnenraum eingesetzten Rolloeinrichtung (1),
**dadurch gekennzeichnet, dass**
die Rolloeinrichtung (10) nach einem der Ansprüche 1 bis 6 ausgebildet ist.

## Claims

1. Roller blind device (10) for a motor vehicle, with
- a housing (20) for receiving an unwindabble, flexible sheetlike structure,
- fastening sections (70) on the left side and right side for attaching the roller blind device (10) to vehicle side walls (80) of the motor vehicle, and
- a receiving device (40) on the left side and on the right side for releasibly receiving the housing (20), said receiving devices being connected to the vehicle side wall (80) by means of the fastening sections (70),
wherein a compensating device (60) is provided at least between one fastening section (70) and the associated receiving device (40), said compensating device in a starting situation, starting from a starting spacing of the housing (20) from the fastening section (70) in the transverse direction (6) of the vehicle, permitting an increase in the spacing by means of plastic deformation of the compensating device (60), **characterized in that** the compensating device (60) is configured in a double-layered L shape, wherein, in the event of an accident, two first L bars (64a, 64b) resting on each other are displaced in parallel in relation to each other as the spacing between the vehicle side walls increases, and two second L bars (66a, 66b) arranged at a right angle to the first L bars (64a, 64b) take up an approximately V shaped position, wherein bending deformations occur in buckling regions (68a, 68b, 68c).

2. Roller blind device for a motor vehicle according to Claim 1, **characterized in that** the compensating device (60) permits an increase in the spacing of at least 30 mm, preferably of at least 50 mm, in the transverse direction (6) of the vehicle.

3. Roller blind device for a motor vehicle according to Claim 1 or 2, **characterized in that** the compensating device (60) is designed for an increase in the spacing in the transverse direction (6) of the vehicle, which increase in the spacing is at least predominantly achievable by a bending deformation of the compensating device (60).

4. Roller blind according to one of the preceding claims, **characterized in that** the compensating device (60) is designed in such a manner that it permits an increase in the spacing between the fastening section (70) and the housing (20) in the transverse direction (6) of the vehicle and in the longitudinal direction (2) of the vehicle.

5. Roller blind according to one of the preceding claims, **characterized in that** the compensating device (60) has a deformation plate (50) or is part of a deformation plate (50).

6. Roller blind according to Claim 5, **characterized in that** the deformation plate (50) is designed for direct fixing to a vehicle side wall (80) and/or to the housing (20) or to a housing receptacle (40), preferably by means of a screw connection or rivet connection in each case.

7. Vehicle with a roller blind device (1) used in a vehicle interior, **characterized in that** the roller blind device (10) is designed according to one of Claims 1 to 6.

## Revendications

1. Dispositif de store déroulant (10) pour un véhicule automobile comprenant
- un boîtier (20) pour recevoir une structure plane flexible déroulable,
- des portions de fixation du côté gauche et du côté droit (70) pour le montage du dispositif de store déroulant (10) sur des parois latérales de véhicule (80) du véhicule automobile et
- un dispositif de réception du côté gauche et du côté droit (40) pour recevoir le boîtier (20) de manière détachable, lesquels sont connectés au moyen des portions de fixation (70) à la paroi latérale du véhicule (80),
au moins entre une portion de fixation (70) et le dispositif de réception associé (40) étant prévu un dispositif de compensation (60), qui, à partir d'un espacement de départ entre le boîtier (20) et la portion de fixation (70) dans la direction transversale du véhicule (6), dans une situation initiale, permet une augmentation de l'espacement par déformation plastique du dispositif de compensation (60), **caractérisé en ce que** le dispositif de compensation (60) est configuré suivant une forme en L à deux couches, et dans le cas d'un accident, deux premières poutres en L (64a, 64b) superposées étant déplacées parallèlement l'une contre l'autre avec l'augmentation de l'espacement des parois latérales du véhicule et deux deuxièmes poutres en L (66a, 66b) disposées à angle droit par rapport aux premières poutres en L (64a, 64b) adoptant une position approximativement en forme de V, des déformations en flexion se produisant dans les régions coudées (68a, 68b, 68c).

2. Dispositif de store déroulant pour un véhicule automobile selon la revendication 1,
**caractérisé en ce que**
le dispositif de compensation (60) permet une augmentation de l'espacement d'au moins 30 mm, de préférence d'au moins 50 mm, dans la direction transversale du véhicule (6).

3. Dispositif de store déroulant pour un véhicule automobile selon la revendication 1 ou 2,
**caractérisé en ce que**
le dispositif de compensation (60) est réalisé pour une augmentation de l'espacement dans la direction transversale du véhicule (6), qui peut être obtenue au moins principalement par une déformation en flexion du dispositif de compensation (60).

4. Dispositif de store déroulant selon l'une quelconque des revendications précédentes,
**caractérisé en ce que**
le dispositif de compensation (60) est réalisé de telle sorte qu'il permette une augmentation de l'espacement entre la portion de fixation (70) et le boîtier (20) dans la direction transversale du véhicule (6) ainsi que dans la direction longitudinale du véhicule (2).

5. Dispositif de store déroulant selon l'une quelconque des revendications précédentes,
**caractérisé en ce que**
le dispositif de compensation (60) présente une tôle de déformation (50) ou fait partie d'une tôle de déformation (50).

6. Dispositif de store déroulant selon la revendication 5,
**caractérisé en ce que**
la tôle de déformation (50) est réalisée pour une fixation directe à une paroi latérale du véhicule (80) et/ou au boîtier (20) ou à un logement du boîtier (40), de préférence à chaque fois avec une connexion vissée ou rivetée.

7. Véhicule comprenant un dispositif de store déroulant (1) utilisé dans un habitacle de véhicule,
**caractérisé en ce que**
le dispositif de store déroulant (10) est réalisé selon l'une quelconque des revendications 1 à 6.
